# EUROPEAN PATENT APPLICATION

(11) **EP 2 395 709 A1**
(43) Date of publication of application: **14.12.2011**
(21) Application number: 10006122.5
(22) Date of filing: 14.06.2010
(51) Int. Cl.: H04L 12/56, H04L 12/24

(54) **System comprising a crossbar switch, telecommunications network and method for controlling data throughput from a plurality of data sources**

(71) Applicant: Deutsche Telekom AG, 53113 Bonn (DE)
(72) Inventor: Köhler, Vitaliy, 64287 Darmstadt (DE)
(74) Representative: Schwöbel, Thilo K.

(57) **Abstract**

The invention is related to a system, a telecommunications network and to a method for controlling data throughput from a plurality of data sources, the crossbar switch having a plurality of input lines and a plurality of output lines,
wherein the crossbar switch is configurable in a first operation mode such that in a first period of time a first input line of the plurality of input lines is connected to a first output line of the plurality of output lines,
wherein the crossbar switch is configurable in a second operation mode such that in a second period of time a second input line of the plurality of input lines is connected to the first output line of the plurality of output lines,
wherein the crossbar switch is configurable in a third operation mode such that in a third period of time the first input line of the plurality of input lines is disconnected from the first output line of the plurality of output lines,
wherein the crossbar switch comprises a control interface,
wherein the system comprises a scheduler device being connected to the control interface via an Ethernet interface transmission line,
wherein the scheduler device comprises control means such that by transmitting control messages from the scheduler device to the control interface of the crossbar switch, the crossbar switch is configurable in the first and/or the second and/or the third operation mode dependent on the transmitted control messages.

## Description

### BACKGROUND

The present invention relates to a system comprising a crossbar switch for controlling data throughput from a plurality of data sources, the crossbar switch having a plurality of input lines and a plurality of output lines. The invention further relates to a telecommunications network and to a method for operating a system for controlling data throughput from a plurality of data sources.

Presently, crossbar switches are generally known that have a plurality of input lines and a plurality of output lines.

Furthermore, it is known to distribute television programmes or television channels via a telecommunications network to network termination devices typically located in customer premises.

Furthermore, television programmes or television channels exist that do not provide content continuously, i.e. for example during 24 hours per day.

The objective of the present invention is to simplify the distribution of content data, especially video data and/or audio data of television programmes or television channels, in a telecommunications network.

### SUMMARY

The object of the present invention is to provide a system comprising a crossbar switch for controlling data throughput from a plurality of data sources, the crossbar switch having a plurality of input lines and a plurality of output lines.

The object of the present invention is achieved by a system comprising a crossbar switch for controlling data throughput from a plurality of data sources, the crossbar switch having a plurality of input lines and a plurality of output lines,
wherein the crossbar switch is configurable in a first operation mode such that in a first period of time a first input line of the plurality of input lines is connected to a first output line of the plurality of output lines,
wherein the crossbar switch is configurable in a second operation mode such that in a second period of time a second input line of the plurality of input lines is connected to the first output line of the plurality of output lines,
wherein the crossbar switch is configurable in a third operation mode such that in a third period of time the first input line of the plurality of input lines is disconnected from the first output line of the plurality of output lines,
wherein the crossbar switch comprises a control interface,
wherein the system comprises a scheduler device being connected to the control interface via an Ethernet interface transmission line,
wherein the scheduler device comprises control means such that by transmitting control messages from the scheduler device to the control interface of the crossbar switch, the crossbar switch is configurable in the first and/or the second and/or the third operation mode dependent on the transmitted control messages.

According to the present invention, it is thereby advantageously possible to very flexibly control the throughput of data from the data sources to the data destinations, especially for distributing a plurality of television programmes or television channels in a telecommunications network. Especially the possibility of automatically or timer controlled change of different operation modes as a consequence of a control message received by the crossbar switch leads to a more flexible possibility of controlling the crossbar switch.

A crossbar switch has a characteristic matrix of switches between the inputs and the outputs. If the switch has M inputs and N outputs, then a crossbar has a matrix with M x N cross-points or places where the "bars" cross. A given crossbar is a single layer, non-blocking switch. Collections of crossbars can be used to implement multiple layer and/or blocking switches. Crossbar switching system is also called a co-ordinate switching system.

According to the present invention, it is preferred that the plurality of input lines are connected to the plurality of data sources and wherein the plurality of output lines are connected to a plurality of data destinations.

Thereby, it is advantageously possible to distribute media content, e.g. video content data and/or audio content data in a structured manner to various destinations of the content information.

Furthermore, it is preferred according to the present invention that the plurality of data sources provide video data and/or audio data.

Still furthermore, it is preferred according to the present invention that the plurality of data destinations receive video data and/or audio data in order to transmit the video data and/or audio data in a telecommunications network.

Thereby, it is advantageously possible to easily and effectively distribute the data contents to an important number of customers of the telecommunications network.

According to the present invention, the plurality of input lines provide the video data and/or audio data preferably using an SDI interface (Serial Digital Interface) or using an ASI interface (Asynchronous Serial Interface). Likewise, the plurality of output lines receive the video data and/or audio data also using an SDI interface (Serial Digital Interface) or using an ASI interface (Asynchronous Serial Interface).

According to another preferred embodiment of the present invention, the control means comprises computer-readable program instructions such as to generate the control messages and send the control messages to the control interface of the crossbar switch.

Thereby, it is advantageously possible to easily configure and adapt the configuration of the crossbar switch.

Furthermore, it is preferred according to the present invention that the Internet Protocol is used on the Ethernet interface transmission line between the control interface of the crossbar switch and the scheduler device.

The present invention also relates to a telecommunications network connected to a system comprising a crossbar switch for controlling data throughput from a plurality of data sources, the crossbar switch having a plurality of input lines and a plurality of output lines, wherein the crossbar switch is configurable in a first operation mode such that in a first period of time a first input line of the plurality of input lines is connected to a first output line of the plurality of output lines,
wherein the crossbar switch is configurable in a second operation mode such that in a second period of time a second input line of the plurality of input lines is connected to the first output line of the plurality of output lines,
wherein the crossbar switch is configurable in a third operation mode such that in a third period of time the first input line of the plurality of input lines is disconnected from the first output line of the plurality of output lines,
wherein the crossbar switch comprises a control interface,
wherein the system comprises a scheduler device being connected to the control interface via an Ethernet interface transmission line,
wherein the scheduler device comprises control means such that by transmitting control messages from the scheduler device to the control interface of the crossbar switch, the crossbar switch is configurable in the first and/or the second and/or the third operation mode dependent on the transmitted control messages.

Furthermore, the present invention relates to a method for operating a system for controlling data throughput from a plurality of data sources, the system comprising a crossbar switch having a plurality of input lines and a plurality of output lines,
wherein the crossbar switch is configurable in a first operation mode such that in a first period of time a first input line of the plurality of input lines is connected to a first output line of the plurality of output lines,
wherein the crossbar switch is configurable in a second operation mode such that in a second period of time a second input line of the plurality of input lines is connected to the first output line of the plurality of output lines,
wherein the crossbar switch is configurable in a third operation mode such that in a third period of time the first input line of the plurality of input lines is disconnected from the first output line of the plurality of output lines,
wherein the crossbar switch comprises a control interface,
wherein the system comprises a scheduler device being connected to the control interface via an Ethernet interface transmission line,
wherein the scheduler device comprises control means such that by transmitting control messages from the scheduler device to the control interface of the crossbar switch, the crossbar switch is operated in the first and/or the second and/or the third operation mode dependent on the transmitted control messages.

According to another preferred embodiment of the present invention, the control messages are generated and sent to the control interface of the crossbar switch.

Additionally, the present invention relates to a program comprising a computer readable program code for executing a method according to the present invention or for configuring or controlling a system according to the present invention.

Furthermore, the present invention relates to a computer program product comprising a computer-readable storage medium having computer-readable program instructions embodied in the medium for executing a method according to the present invention or for configuring or controlling a system according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a system comprising a crossbar switch for controlling data throughput from a plurality of data sources.

Figure 2 schematically illustrates an example of a graphical representation for visualising the configuration for controlling the crossbar switch of the inventive system.

Figure 3 schematically illustrates a further example of a graphical representation for visualising the configuration for controlling the crossbar switch of the inventive system.

Figures 4 to 6 schematically illustrates additional details for visualising the configuration for controlling the crossbar switch of the inventive system.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

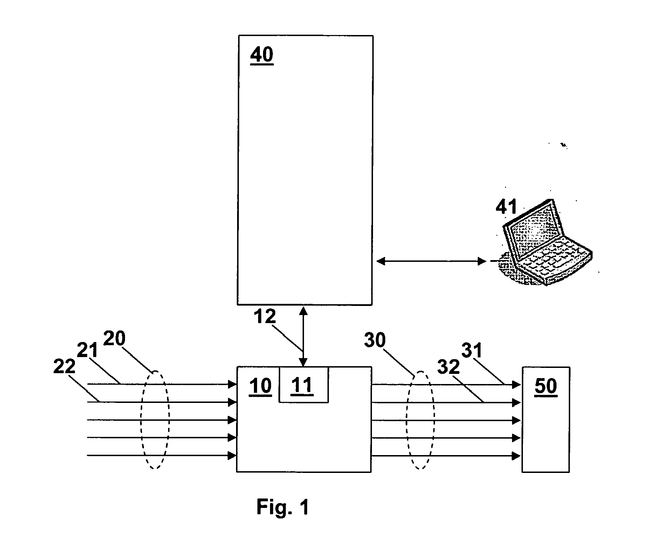

In Figure 1, a system comprising a crossbar switch 10 for controlling data throughput is schematically shown. The data are provided to the crossbar switch 10 by means of a plurality of data sources (that are not depicted) via a plurality of input lines 20. For illustration purposes, the plurality of input lines 20 is represented comprising a first input line 21, a second input line 22 as well as further input lines that are not designed by means of a reference numeral. The data are provided by the crossbar switch 10 to a plurality of data destinations (that are not depicted) via a plurality of output lines 30. For illustration purposes, the plurality of output lines 30 is represented comprising a first output line 31, a second output line 32 as well as further output lines that are not designed by means of a reference numeral. According to a preferred embodiment of the present invention, the plurality of data destinations telecommunications network 50 is connected to the

Besides the crossbar switch 10, the system comprises a scheduler device 40. The scheduler device 40 is connected to the crossbar switch 10 via an Ethernet interface transmission line 12. A control interface 11 serves as an interface between the crossbar switch 10 and the Ethernet interface transmission line 12. Preferably, the Simple Network Management Protocol (SNMP) is used for the communication between the crossbar switch 10 (or of the control interface 11 of the crossbar switch 10) and the scheduler device 40 via the Ethernet interface transmission line 12. Furthermore, it is preferred according to the present invention that a client device 41 is connected to the scheduler device 40 in order to configure (e.g. by means of a remote desktop application) the scheduler device 40 in view of controlling the crossbar switch 10.

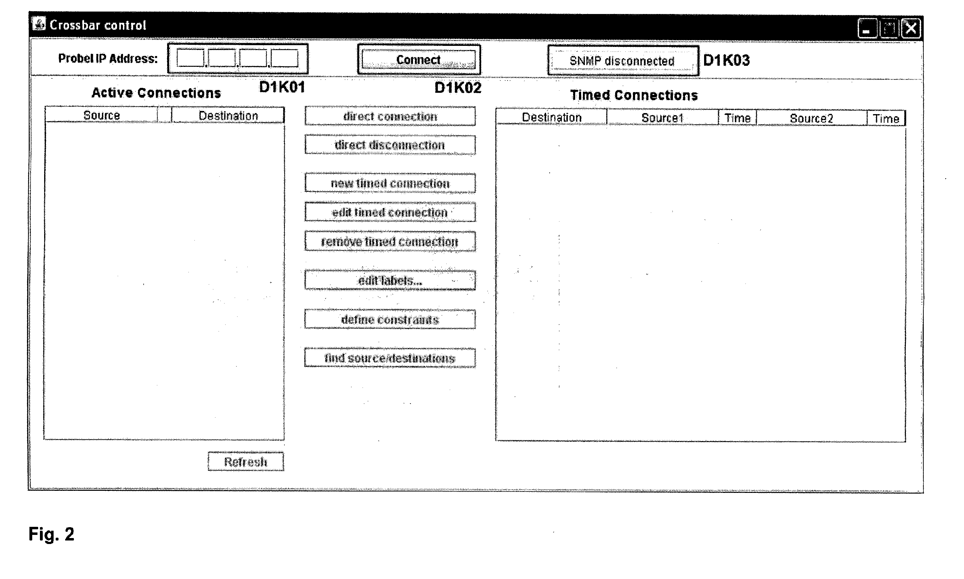

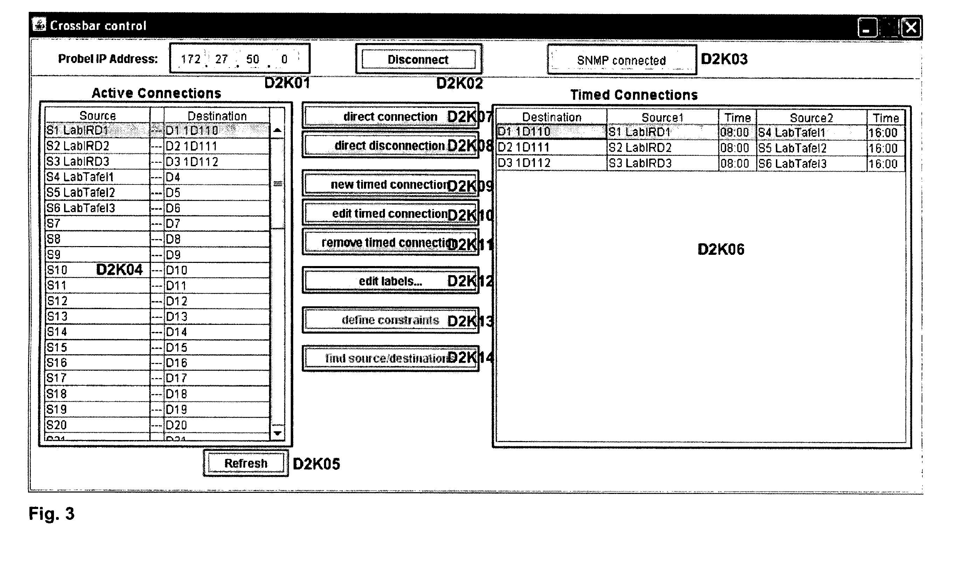

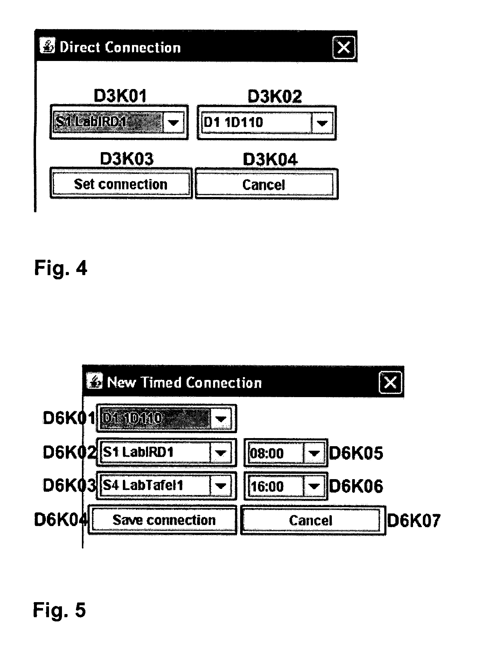

In Figure 2, an example of a graphical representation for visualising the configuration for controlling the crossbar switch 10 of the inventive system is schematically shown. In Figure 3, a further example of a graphical representation for visualising the configuration for controlling the crossbar switch 10 of the inventive system is schematically shown. In Figures 4 to 6 additional details for visualising the configuration for controlling the crossbar switch of the inventive system are schematically shown. The graphical representations of Figures 2 to 6 refer to a graphical user interface (displayed on the client 41 connected to the scheduler device 40) of a computer program that is executed on the scheduler device 40. The computer program is an example for control means of the scheduler device 40 that generates control messages to be transmitted via the Ethernet interface transmission line 12 to the crossbar switch 10 (or of the control interface 11 of the crossbar switch 10). The computer program is, e.g., realized using Java-Technology, preferably using J2SE-Technology (Java 2 Second Edition).

The control logic of the crossbar switch 10 is always destination oriented, i.e. there is the possibility that a specific data source, e.g. linked to the first input line 21, is connected with a specific data destination, e.g. linked to the first output line 31. Further control logic, such as a timed control logic, a plurality of connections or such as the reaction on an external trigger event, is implemented by means of the control means in the scheduler device 40.

In the following, the graphical user interface of the control means realized in the scheduler device is described by means of Figures 2 to 6.

In Figure 2, a text box D1 K01 relates to an input possibility for the Internet Protocol address of the crossbar switch 10. A key button D1K02 relates to the possibility of changing the connection state. In the case shown in Figure 2, the information "connect" relates to the possibility of establishing a connection between the scheduler device 40 and the crossbar switch 10 via the Internet Protocol address specified in the text box D1K01. An information box D1 K03 relates to displaying an information related to the state of connection between the scheduler device 40 and crossbar switch 10 via the SNMP protocol. In the situation shown in Figure 2, no connection is established and therefore the text "SNMP disconnected" is displayed in the information box D1K03.

In Figure 3, a text box D2K01, a key button D2K02 and an information box D2K03 are shown relating to the corresponding graphical items in Figure 2: The text box D2K01 contains an Internet Protocol address and a connection has been established between the scheduler device 40 and crossbar switch 10 which is indicated by the information "SNMP connected" in the information box D2K03. In the case shown in Figure 3, the information "disconnect" relates to the possibility of removing the connection between the scheduler device 40 and the crossbar switch 10. The displayed information in a table field D2K04 relates to the active connections established within the crossbar switch 10. In the example given, data source "LabIRD1" is connected with data destination "1D110", data source "LabIRD2" is connected with data destination "1D111", data source "LabIRD3" is connected with data destination "1 D112", and data sources "LabTafel1", "LabTafel2", "LabTafel3" are only connected to input lines 20 of the crossbar switch 10 (but not to destinations). of the crossbar switch 10. A key button D2K05 relates to the possibility of refreshing the display of the current configuration situation. The displayed information in a table field D2K06 relates to the scheduled connections to be established within the crossbar switch 10. In the example given, in a first period of time, the following connections are established: data source "LabIRD1" and data destination "1 D110", data source "LabIRD2" and data destination "1D111", as well as data source "LabIRD3" and data destination "1 D112", whereas in a second period of time, the following connections are established: data source "LabTafel1" and data destination "1D110", data source "LabTafel2" and data destination "1D111", as well as data source "LabTafel3" and data destination "1 D112".

A key button D2K07 labelled "direct connection" serves to manually define or create a connection between a data source (or an input line) and a data destination (or an output line). By activating the key button D2K07, a dialog box represented in Figure 4 is displayed. This dialog box displayed in Figure 4 comprises a list selection D3K01 for selecting all the data sources (or input lines 20) of the crossbar switch 10, another list selection D3K02 for selecting all the data destinations (or output lines 30) of the crossbar switch 10, a key button D3K03 labelled "Set connection" for the creation of the selected combination between an input line and an output line, as well as a key button D3K04 labelled "Cancel" for leaving the dialog box.

In Figure 3, A key button D2K08 labelled "direct disconnection" serves to manually remove a connection between a data source (or an input line) and a data destination (or an output line).

In Figure 3, a key button D2K09 labelled "new timed connection" serves to manually define or create a connection between a data source (or an input line) and a data destination (or an output line) in a time controlled manner. By activating the key button D2K09, a dialog box represented in Figure 5 is displayed. This dialog box displayed in Figure 5 comprises a list selection D6K01 for selecting all the data destination (or output lines 30) of the crossbar switch 10, another list selection D6K02 for selecting all the data sources (or input lines 20) of the crossbar switch 10, still another list selection D6K03 for selecting all the data sources (or input lines 20) of the crossbar switch 10, as well as further list selections D6K05 and D6K06 for selecting a time for connecting the different data sources chosen by means of D6K02 and D6K03 to the data destination chosen by means of D6K01 at predefined times. A key button D3K04 labelled "Save connection" is activated for the creation of the selected timed combination between an input line and an output line. A key button D6K07 labelled "Cancel" stands for leaving the dialog box.

According to the present invention, It is thereby possible to automatically relate different input lines (such as the first input line 21 and the second input line 22) with one output line (such as the first output line 31) at different periods of time. Thereby, different operation modes of the crossbar switch 10 are realized that are automatically changed or set by means of a control messages sent from the scheduler device 40 to the crossbar switch 10 at the appropriate times that are set in the corresponding configuration table of the scheduler device 40.

In Figure 3, a further key button D2K11 labelled "remove timed connection" serves to delete a selected timed connection between input lines 20 and output lines 30. A further key button D2K12 labelled "edit labels" serves to edit the identifier associated with different data sources or data destinations.

According to the present invention, it is possible and preferred that modifications of the configuration of the scheduler device 40 related to the control of the crossbar switch 10 can be communicated to the scheduler device 40 via other channels than via the graphical user interface represented in Figures 2 to 5. For example, it is possible and preferred according to the present invention that the configuration of the scheduler device 40 is changed by at least one out of:
-- a manual trigger,
-- SNMP-traps (external to the scheduler device 40),
-- a file comprising the timing and connection information,
-- a trigger from an EPG (electronic program guide) device,
-- a trigger from an SI-Subsystem device.

## Claims

1. System comprising a crossbar switch (10) for controlling data throughput from a plurality of data sources, the crossbar switch (10) having a plurality of input lines (20) and a plurality of output lines (30),
wherein the crossbar switch (10) is configurable in a first operation mode such that in a first period of time a first input line (21) of the plurality of input lines (20) is connected to a first output line (31) of the plurality of output lines (30),
wherein the crossbar switch (10) is configurable in a second operation mode such that in a second period of time a second input line (22) of the plurality of input lines (20) is connected to the first output line (31) of the plurality of output lines (30), wherein the crossbar switch (10) is configurable in a third operation mode such that in a third period of time the first input line (21) of the plurality of input lines (20) is disconnected from the first output line (31) of the plurality of output lines (30), wherein the crossbar switch (10) comprises a control interface (11),
wherein the system comprises a scheduler device (40) being connected to the control interface (11) via an Ethernet interface transmission line (12),
wherein the scheduler device (40) comprises control means such that by transmitting control messages from the scheduler device (40) to the control interface (11) of the crossbar switch (10), the crossbar switch (10) is configurable in the first and/or the second and/or the third operation mode dependent on the transmitted control messages.

2. System according to claim 1, wherein the plurality of input lines (20) are connected to the plurality of data sources and wherein the plurality of output lines (30) are connected to a plurality of data destinations.

3. System according to any of the preceding claims, wherein the plurality of data sources provide video data and/or audio data.

4. System according to any of the preceding claims, wherein the plurality of data destinations receive video data and/or audio data in order to transmit the video data and/or audio data in a telecommunications network (50).

5. System according to any of the preceding claims, wherein the control means comprises computer-readable program instructions such as to generate the control messages and send the control messages to the control interface (11) of the crossbar switch (10).

6. System according to any of the preceding claims, wherein the Internet Protocol is used on the Ethernet interface transmission line between the control interface (11) of the crossbar switch (10) and the scheduler device (40).

7. Telecommunications network (50) connected to a system comprising a crossbar switch (10) for controlling data throughput from a plurality of data sources, the crossbar switch (10) having a plurality of input lines (20) and a plurality of output lines (30),
wherein the crossbar switch (10) is configurable in a first operation mode such that in a first period of time a first input line (21) of the plurality of input lines (20) is connected to a first output line (31) of the plurality of output lines (30),
wherein the crossbar switch (10) is configurable in a second operation mode such that in a second period of time a second input line (22) of the plurality of input lines (20) is connected to the first output line (31) of the plurality of output lines (30), wherein the crossbar switch (10) is configurable in a third operation mode such that in a third period of time the first input line (21) of the plurality of input lines (20) is disconnected from the first output line (31) of the plurality of output lines (30), wherein the crossbar switch (10) comprises a control interface (11),
wherein the system comprises a scheduler device (40) being connected to the control interface (11) via an Ethernet interface transmission line (12),
wherein the scheduler device (40) comprises control means such that by transmitting control messages from the scheduler device (40) to the control interface (11) of the crossbar switch (10), the crossbar switch (10) is configurable in the first and/or the second and/or the third operation mode dependent on the transmitted control messages.

8. Method for operating a system for controlling data throughput from a plurality of data sources, the system comprising a crossbar switch (10) having a plurality of input lines (20) and a plurality of output lines (30),
wherein the crossbar switch (10) is configurable in a first operation mode such that in a first period of time a first input line (21) of the plurality of input lines (20) is connected to a first output line (31) of the plurality of output lines (30),
wherein the crossbar switch (10) is configurable in a second operation mode such that in a second period of time a second input line (22) of the plurality of input lines (20) is connected to the first output line (31) of the plurality of output lines (30), wherein the crossbar switch (10) is configurable in a third operation mode such that in a third period of time the first input line (21) of the plurality of input lines (20) is disconnected from the first output line (31) of the plurality of output lines (30), wherein the crossbar switch (10) comprises a control interface (11),
wherein the system comprises a scheduler device (40) being connected to the control interface (11) via an Ethernet interface transmission line (12),
wherein the scheduler device (40) comprises control means such that by transmitting control messages from the scheduler device (40) to the control interface (11) of the crossbar switch (10), the crossbar switch (10) is operated in the first and/or the second and/or the third operation mode dependent on the transmitted control messages.

9. Method according to claim 8, wherein video data and/or audio data are provided from the plurality of data sources and received by the data destinations to transmit the video data and/or audio data in a telecommunications network (50).

10. Method according to claims 8 or 9 wherein, the control messages are generated and sent to the control interface (11) of the crossbar switch (10).

11. Program comprising a computer readable program code for executing a method according to one of claims 8 to 10 or for configuring or controlling a system according to one of claims 1 to 6.

12. Computer program product comprising a computer-readable storage medium having computer-readable program instructions embodied in the medium for executing a method according to one of claims 8 to 10 or for configuring or controlling a system according to one of claims 1 to 6.
